# EUROPÄISCHE PATENTSCHRIFT

(11) **EP 1 818 625 B1**
(45) Veröffentlichungstag und Bekanntmachung des Hinweises auf die Patenterteilung: **20.11.2013**
(21) Anmeldenummer: 07003044.0
(22) Anmeldetag: 13.02.2007
(51) Int. Cl.: F24J 2/46, F24J 2/50

(54) **Solarkollektoranordnung**
Solar collector assembly
Agencement de collecteurs solaires

(30) Priorität: 13.02.2006 DE 102006006718
(43) Veröffentlichungstag der Anmeldung: 15.08.2007
(60) Teilanmeldung: 12163542.9
(73) Patentinhaber: ZYRUS Beteiligungsgesellschaft mbH & Co. Patente I KG, 12529 Schönefeld / Waltersdorf (DE)
(72) Erfinder: Schütz, Hans, 93073 Neutraubling (DE)
(74) Vertreter: Zech, Stefan Markus

(56) Entgegenhaltungen:
- EP-A2- 0 031 479
- WO-A1-2006/059071
- WO-A2-2006/099028
- DE-A1- 2 724 314
- DE-A1- 3 818 955
- DE-A1- 19 703 467
- DE-A1- 19 743 418
- DE-U1- 20 313 564
- FR-A1- 2 422 118
- FR-A1- 2 606 495

## Beschreibung

Die vorliegende Erfindung betrifft eine Solarkollektorenanordnung mit den Merkmalen des unabhängigen Anspruchs 1.

Solarkollektoren zur Brauchwassererwärmung sind in verschiedenen Ausführungsvarianten bekannt. Es gibt sie bspw. in Form von flachen, rechteckförmigen Modulen, die mittels geeigneter Haltegestelle in sog. Aufdach-Montage auf Gebäudedächer montierbar sind. Daneben gibt es Kollektoren für eine sog. Indach-Montage, bei der größere Areale von Dachpfannen durch Kollektorenfelder ersetzt werden, die mehr oder weniger bündig mit der umgebenden Dachfläche abschließen. Bei dieser dachintegrierten Montage werden die Kollektoren auf ein abgedecktes Dach direkt auf die Dachlattung oder eine entsprechende Holzkonstruktion montiert. Sonnenkollektoren werden bisher im Wesentlichen nach folgenden Methoden aufgebaut:

Zum einen gibt es sog. Baukastensysteme, bei denen Holzrahmen, welche die Absorber umfassen, auf das Dach geschraubt werden. Hierauf werden anschließend mittels Profilschienen, die meist aus Aluminium gefertigt sind, Solarscheiben aufgeschraubt. Daneben gibt es auch fertig vormontierte Kollektoren mit einem Kollektorrahmen aus Holz oder Aluminium mit bereits montierter Glasscheibe. In diesem Fall werden die fertigen Kollektoren auf der Dachlattung befestigt und bei der Montage mittels Profilschienen nebeneinander verschraubt und abgedichtet. Bei der Montage übereinander muss zwischen einem unteren und einem oberen Kollektormodul ein Abstand eingehalten werden, damit die Verbindungsleitung zwischen den Kollektoren untergebracht werden kann. Dieser Abstand wird entweder mit einer Blecheinfassung oder mit einer Profilschiene wasserdicht abgedeckt.

Der Vorteil der zuerst beschriebenen Montageart ist, dass die Kollektoren schlüssig aneinander gesetzt und miteinander verbunden werden können, weil die Glasscheiben erst nachträglich eingebaut werden. Nach der Montage ergibt dies nach außen eine schöne homogene Fläche. Nachteilig sind der separate Transport und Montage der Glasscheibe und die Tatsache, dass bei Regen nicht montiert werden kann, da sonst die hochselektive Absorberschicht beschädigt werden kann.

Der Vorteil der zweiten beschriebenen Montageart ist, dass ein kompletter Kollektor installiert werden kann. Der Nachteil ist, dass bei Montagen übereinander wegen der Rohrverbindungen zwischen den Kollektoren immer ein gewisser Abstand eingehalten werden muss. Dies sieht nicht homogen aus und ist zudem kostenaufwändiger, da zusätzliche Blecheinfassungen und/oder Profilschienen zwischen den Kollektoren nötig sind.

Ein weiteres gemeinsames Merkmal von bekannten Kollektoren im thermischen Kollektorbau besteht in der Verbindung des Kollektorrahmens. Die bekannten Kollektoren werden typischerweise so angefertigt, dass auf einen Kollektorrahmen aus Holz, Aluminium oder einem anderen Material die als transparente Abdeckung dienende Glasscheibe in den Kollektorrahmen eingeklebt, verrastet bzw. eingeklipst, mit dem Rahmen verpresst oder mit speziellen Leisten auf den Rahmen aufgeschraubt ist. Das tragende und Form gebende Element aller Kollektoren dieser Bauart ist somit der Rahmen. Die Solarglasscheibe wird in den Rahmen wie oben beschrieben montiert. Der Rahmen muss ausreichend stabil sein, um den Kollektor auf dem Dach mit entsprechenden Profilen befestigen zu können. Die Trägerprofile auf dem Dach werden dann entweder direkt oder mit Klemmstücken mit dem Kollektor verbunden oder dort angeschraubt, verklemmt oder mit Nut- und Federprofilen ineinander verrastet.

Die DE 199 04 646 A1 beschreibt einen thermischen Solarkollektor mit symmetrischem Gehäuse, bei dem die beiden Gehäusehälften selbsttragend und so ausgebildet sind, dass sie nach dem Zusammenfügen mit den übrigen Bauteilen (u.a. Absorber) einen Solarkollektor bilden. Die Gehäusehälften können insbesondere im Spritzgießverfahren aus Kunststoff gefertigt sein. Es wird nicht unterschieden zwischen einer Abdeckung und einem Gehäuse, da beide Gehäusehälften gleich sind.

Die EP 1 146 296 A2 beschreibt einen Solarkollektor, der Rahmenteile als tragende Elemente aufweist. An diesen Gehäuseteilen ist eine transparente Abdeckung verankert. An diesen Gehäuseteilen wird der Kollektor auch in einem Stützrahmen, bspw. auf einem Gebäudedach, montiert. Eine mittragende oder stabilisierende Funktion der transparenten Abdeckung ist nicht vorgesehen.

Die DE 77 15 639 U1 zeigt weiterhin einen Solarflachkollektor mit einer transparenten Abdeckung, die jedoch ebenfalls keine tragende bzw. stabilisierende Funktion aufweist. Der alleine tragende und stabilisierende Teil des Kollektors wird durch das Gehäuse gebildet.

Ein vorrangiges Ziel der vorliegenden Erfindung besteht darin, einen stabilen und robusten Sonnenkollektor zur Verfügung zu stellen, der komplett vorgefertigt ist, und gleichzeitig eine einfache Montage ohne zusätzliche Abdeckbleche und/oder Abdeckprofile zur Abdeckung der Rohrverbindungen zwischen den Kollektoren ermöglicht. Das fertig montierte Kollektorfeld soll eine homogene Scheibenfront darstellen.

Der Kollektor soll je nach Ausführungsform sowohl zur Indach- als auch für die Aufdach-Montage geeignet sein.

Diese Ziele der Erfindung werden mit dem Gegenstand des unabhängigen Anspruchs 1 erreicht. Merkmale vorteilhafter Weiterbildungen der Erfindung ergeben sich aus den jeweiligen abhängigen Ansprüchen.

Eine erfindungsgemäße Solarkollektoranordnung mit den Merkmlane des Anspruchs 1 umfasst eine auf einem Dach anordenbare Rahmenkonstruktion, auf der eine Mehrzahl von Solarkollektoren angeordnet ist, wobei jeder der Solarkollektoren zumindest einen Absorber, wenigstens ein Wärmetauscherrohr bzw. Wärmetauscherelement mit in den Solarkollektor hinein bzw. aus diesem heraus führenden Zu- bzw. Ablaufrohren bzw. Zu-/Ableitungen, und eine größtenteils transparente, im Wesentlichen flache Abdeckung umfasst, die einen zumindest mittragenden Bestandteil des Solarkollektors bildet, wobei die größtenteils transparente Abdeckung den annähernd alleine tragenden Teil des Solarkollektors bildet, wobei an allen Seiten des Solarkollektors ein die Absorberfläche überragender Abschnitt der größtenteils transparenten Abdeckung vorgesehen ist, der zur Abdeckung von Zu- bzw. Ablaufrohren wenigstens eines unterhalb oder daneben angeordneten Solarkollektors und/oder zur Abdeckung von Verbindungsrohren zwischen zwei unterhalb oder daneben angeordneten Solarkollektoren ausgebildet ist.

Der Kollektor kann in bevorzugter Ausgestaltung weitgehend nur aus den genannten Bauteilen Absorber, Wärmetauscherrohr(en) und Abdeckung bestehen, wobei der Absorber in einem vorgegebenen Abstand mit der Abdeckung verklebt sein kann. Im Neubau oder Bauten mit bereits isoliertem Dach kann dieses Kollektorelement einfach mit entsprechenden Profilen auf dem Dach wasserdicht befestigt werden und kann. Aus mehreren Kollektoren kann somit ggf. ein ganzes Energiedach gebildet werden.

Wesentlich für diese Erfindungsvariante ist die Tatsache, dass die transparente Abdeckung - insbesondere eine Glasscheibe aus Mineralglas - als tragendes Element des Kollektors genutzt wird. Die Befestigung kann hierbei sowohl als Indachlösung als auch außerhalb der Dachpfannen als Aufdachlösung erfolgen.

Eine Variante des erfindungsgemäßen Solarkollektors umfasst eine Rückwand, einen umlaufenden Kollektorrahmen, einen Absorber, wenigstens ein Wärmetauscherrohr mit in den Kollektor hinein bzw. aus diesem heraus führenden Zu- bzw. Ablaufrohren, und eine auf dem Rahmen angeordnete, größtenteils transparente Abdeckung. Die transparente Abdeckung bzw. die Glasscheibe ist hierbei mit dem Kollektorrahmen verklebt und bildet einen zumindest mittragenden Bestandteil des Kollektors.

Die Abdeckung bzw. die Glasscheibe bildet den stabilisierenden Teil des Kollektors, der insbesondere auch zur Montage des Kollektors genutzt werden kann. Wie oben erwähnt, kann der Rahmen somit ggf. ganz entfallen oder aus kostengünstigen Bauteilen gebildet sein, bspw. aus entsprechend umgeformtem Blech oder aus in die gewünschte Form gebrachten Isolierschichten, die bspw. geschäumt sein können. Die Rückwand sowie ggf. die Seitenwände des - optionalen - Rahmens weisen vorzugsweise eine Isolierschicht zur Wärmeisolierung auf.

Der Kollektorrahmen besteht vorzugsweise aus Holz oder Aluminium, er kann aber auch aus einem anderen geeigneten Material bestehen, bspw. aus Blech oder aus Isoliermaterial.

Der Absorber ist bspw. ein Absorberblech, das sich bei Sonneneinstrahlung stark aufheizt und eine Wärmeträgerflüssigkeit, welche unterhalb des Absorbers liegende Wärmetauscherrohre durchfließt, erwärmt. Über Zu- bzw. Ablaufrohre und Verbindungsrohre sind mehrere Kollektoren in Reihe miteinander verbunden, so dass die Wärmeträgerflüssigkeit für eine stärkere Erwärmung nacheinander mehrere Kollektoren durchfließt.

Die Abdeckung des Kollektors ist größtenteils transparent, damit die Sonneneinstrahlung ungehindert den Absorber erreicht. Beispielsweise ist die größtenteils transparente Abdeckung eine Glasscheibe.

Bei der Solarkollektoranordnung der Erfindung überragt die größtenteils transparente Abdeckung den Kollektorrahmen umlaufend, wobei gemäß einer vorteilhaften Ausgestaltung der Erfindung mindestens ein an einer Seite des Kollektors überragender Abschnitt zur Abdeckung der darunter angeordneten Zu- bzw. Ablaufrohre ist etwas breiter als die überragenden Abschnitte der anderen Seiten. Somit kann eine Seite des Glases weiter über das Gehäuse überstehen als die drei anderen, muss aber nicht, da entsprechende Anschlussmöglichkeiten gleiche Glasabstände zum Rahmen ermöglichen könnten.

Auf den Kollektorrahmen aus Holz oder Aluminium oder einem anderen Material wird die größtenteils transparente Abdeckung, bspw. die Glasscheibe so aufgebracht, bspw. aufgeklebt oder aufgeklemmt, dass die größtenteils transparente Abdeckung etwas über den Rahmen übersteht. Die Abdeckung ist in ihren Abmessungen größer als der Kollektorrahmen. Bspw. an der unteren Seite (betrachtet von der vorderen Draufsicht des Kollektors) steht die Abdeckung so weit über den Kollektorrahmen, dass bei einer Montage übereinander die Rohrverbindungen der unteren Kollektorreihe mit dem Abdeckungsüberstand der oberen Kollektorreihe überdeckt werden können.

Alternativ können überstehende Abschnitte an gegenüberliegenden Seiten des Kollektors jeweils etwas breiter gestaltet sein als die überstehenden Abschnitte der anderen beiden Seiten. Diese können dann gemeinsam einer Abdeckung der Verrohrung dienen, indem sie aneinander stoßend verlegt werden.

Der überragende Abschnitt der größtenteils transparenten Abdeckung kann lichtundurchlässig beschichtet, bspw. lackiert sein. Bspw. kann das Glas ist an dieser Stelle (nur der Überstand) von innen mit derselben Farbe wie die Oberfläche des Absorbers lackiert sein. Auf diese Weise ergibt sich eine homogene äußere Erscheinung des Kollektors und insbesondere eines auf einem Dach montierten Kollektorfeldes, welches aus mehreren der erfindungsgemäßen Solarkollektoren zusammengesetzt ist.

Der überragende Abschnitt der Abdeckung wird vorzugsweise für die Montage des Kollektors genutzt.

Der beschriebene Solarkollektor kann für eine Dachmontage komplett vorgefertigt sein, das heißt, Rückwand, Rahmen, Absorber, Isolierung, Verrohrung (außer den Verbindungsrohren zwischen den Kollektoren) und transparente Abdeckung können bereits vor der Dachmontage fest miteinander verbunden sein. Derartige einzelne, vorgefertigte Module können zum Aufbau einer homogenen Kollektorfläche auf ein Dach montiert werden.

Der Erfindung kommt u.a. besondere Bedeutung zu, da in Zukunft Kollektoren auch in Verbindung mit Wärmepumpe verwendet werden. Der Absorber kann somit direkt mit der Glasscheibe verbunden sein (angeklebt oder anderweitig mechanisch verbunden). Er wird dann von der Sole der Wärmepumpe durchflossen und kann dadurch auch unter den Taupunkt abgekühlt werden, was Kondenswasser am Absorber zur Folge hat. Die Unterkonstruktion muss dann so gestaltet sein, dass dieses Kondenswasser abfließen kann. Denkbar ist auch eine Wannenkonstruktion, aus der das Kondenswasser abfließt. Etwaiges Kondenswasser kann bspw. entsprechend einer zuvor genannten Variante durch die Rahmenkonstruktion abfließen.

Neben der erwähnten Befestigungsmöglichkeit der Rückwand oder Isolierung an der Glasscheibe durch Verkleben sind zahlreiche andere mechanische Befestigungsmöglichkeiten denkbar. Die transparente Abdeckung ist nach dem Stand der Technik z.Z. meist Glas, könnte aber auch in Zukunft eine Kunststoffplatte sein.

Derzeit sind keine thermischen Solarkollektoren bekannt, die entsprechend der vorliegenden Erfindung aufgebaut sind. Auf die bisher notwendigen Rahmen kann weitgehend verzichtet werden bzw. der Rahmen kann im Wesentlichen darauf reduziert werden, nur noch als mechanischer Schutz für das Innenleben des Kollektors zu fungieren, und nicht mehr als tragendes Element. Somit ergeben sich enorme Einsparungspotentiale im Bau von Kollektoren. Als Rahmenkonstruktion für die Aufnahme der Glasscheiben und deren wasserdichte Abdeckung können standardisierte Bauelemente aus der Fassadenbauweise mit Glas verwendet werden, wodurch die erfindungsgemäßen Kollektoren zu sehr geringen Kosten hergestellt werden können.

Der Montageablauf eines Kollektorfeldes dieser Bauart ist wie folgt:
Zuerst wird auf dem Dach eine Rahmenkonstruktion entsprechend der Größe der einzelnen Kollektoren montiert. Diese Rahmenkonstruktion kann als Ablaufrinne für eventuell eindringendes Wasser dienen. Hauptsächlich dient sie als Auflage der Kollektoren, insbesondere als Auflage für die überstehenden Seiten der größtenteils transparenten Abdeckungen (mit den daran befestigten Kollektoren). Nun wird die untere Reihe des Kollektorfeldes (Kollektor neben Kollektor) in diese Rahmenkonstruktion eingelegt und miteinander hydraulisch verbunden, indem jeweils ein Verbindungsrohr, bspw. ein Wellschlauch oder ein vorgefertigter Rohrbogen, zwischen einem Ablaufroher eines Kollektore und einem Zulaufrohr eines anderen Kollektors verlegt wird. In der gleichen Weise folgen nun alle darüber liegenden Reihen der Kollektorfelder. Diese decken mit den breiten, überstehenden Abschnitten der größtenteils transparenten Abdeckungen die Rohrverbindungen der darunter liegenden Kollektorreihen ab. Sind alle Kollektoren eingelegt und miteinander hydraulisch verbunden, können zur Abdichtung von oben Profilleisten aufgeschraubt werden.

Der Überstand der größtenteils transparenten Abdeckung erlaubt es einerseits, einen Kollektor bereits mit Abdeckung vorzufertigen und andererseits die Verbindungsleitungen zwischen den Kollektoren darunter zu integrieren, ohne bei der Montage von mehreren Kollektoren übereinander mit Abdeckblechen oder Abdeckprofilen arbeiten zu müssen. Dies spart Zeit bei der Montage und Materialkosten. Optisch ist es ein wesentlicher Vorteil, weil das gesamte Kollektorfeld als einheitlicher Aufbau einer Scheibenfront erscheint.

Die Stoßkanten zwischen den einzelnen Sonnenkollektoren können bspw. durch Profilleisten abgedeckt sein, wobei diese Profilleisten vorzugsweise die Spalte zwischen aneinander grenzenden Kollektoren abdichten.

Die Kollektoranordnung eignet sich wie erwähnt sowohl zur Indach-Montage wie auch zur Aufdach-Montage. Sie kann jedoch auch an Gebäudefassaden montiert oder frei aufgestellt werden, bspw. auf geeigneten Gestellen.

Wenn im vorliegenden Zusammenhang von Kollektoren gesprochen wird, so ist damit sowohl eine herkömmliche Ausführung gemeint, bei der Absorber und Wärmetauscherrohre in einem kastenförmigen Behälter montiert sind, der von einer transparenten Abdeckung bedeckt ist. Es ist damit jedoch auch eine erfindungsgemäße Bauform gemeint, die im Wesentlichen nur aus der tragenden transparenten Abdeckung - bspw. eine Glasscheibe - sowie dem darunter montierten Absorber mit den zugehörigen Sammelleitungen gebildet ist.

Weiterhin ist mit dem Begriff "Kollektor" eine Bauform umfasst, die ein nahezu beliebiges Wärmetauscherelement mit Zu- und Ableitungen aufweist, bei dem nicht unbedingt Wasser als Wärmeträger fungieren muss.

Die Erfindung wird nachfolgend anhand eines bevorzugten Ausführungsbeispiels unter Bezugnahme auf die beiliegenden Zeichnungen näher erläutert. Das Ausführungsbeispiel ist lediglich beispielhaft zu verstehen und schränkt die erfinderische Lehre in keiner Weise ein. Gleiche Bauteile sind grundsätzlich mit gleichen Bezugszeichen versehen und werden teilweise nicht mehrfach erläutert.
Fig. 1 zeigt eine Draufsicht auf eine erste Variante eines erfindungsgemäßen Solarkollektors.
Fig. 2 zeigt eine Seitenansicht des Solarkollektors gemäß Fig. 1.
Fig. 3 zeigt eine Draufsicht auf eine alternative Variante eines erfindungsgemäßen Solarkollektors.
Fig. 4 zeigt eine Seitenansicht des Solarkollektors gemäß Fig. 3.
Fig. 5 zeigt eine Draufsicht auf eine Solarkollektoranordnung, bestehend aus mehreren Kollektoren gemäß einer der vorherigen Figuren.

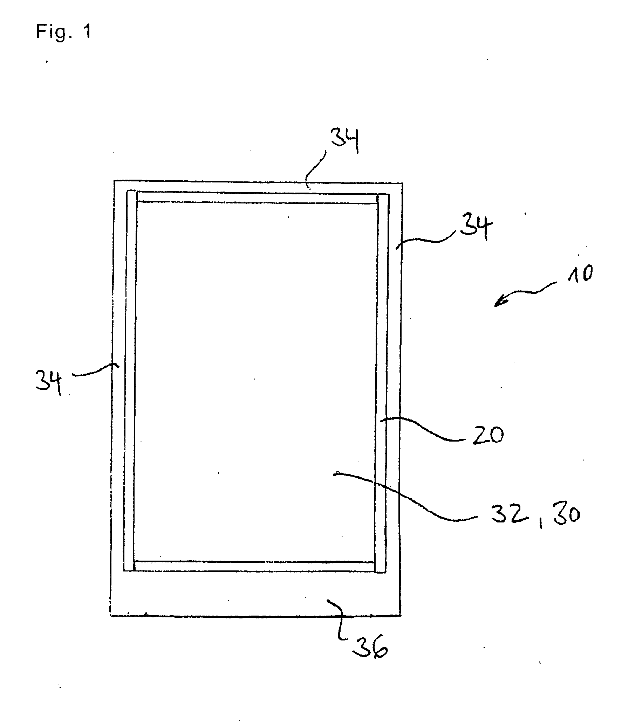

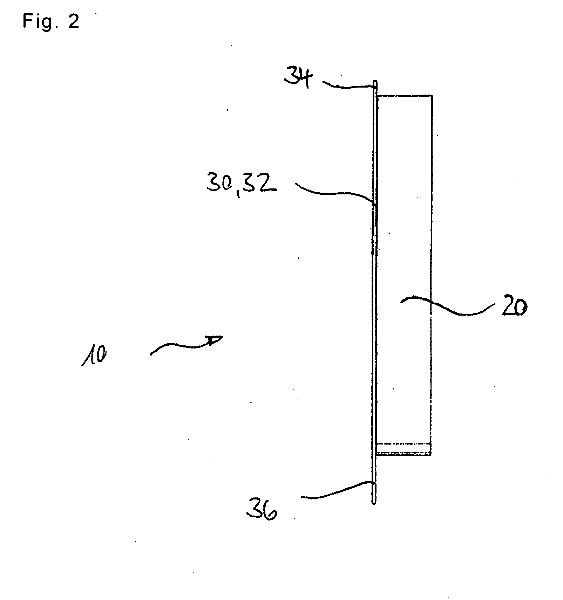

Die in den Figuren 1 und 2 dargestellte erste Variante eines erfindungsgemäßen Solarkollektors 10 umfasst einen Kollektorrahmen 20 und eine Glasscheibe 32, die eine größtenteils transparente Abdeckung 30 des Kollektors 10 darstellt. Weitere Elemente des Solarkollektors 10 wie die isolierende Rückwand, die Wärmetauscherrohre, die Zu- bzw. Ablaufrohre und die Absorberschicht sind nicht dargestellt, da sie nicht erfindungsrelevant sind.

Die schematischen Darstellungen der Figuren 1 und 2 verdeutlichen, wie die größtenteils transparente Abdeckung 30 auf dem Kollektorrahmen 20 angebracht ist. Die Glasscheibe 32 ist größer als der Kollektorrahmen 20 und überragt diesen umlaufend. An drei Seiten ist der überstehende Abschnitt 34 in etwa gleich breit. An einer Seite 36 ist der überstehende Abschnitt etwas breiter als an den anderen drei Seiten. Die Überstande 34, 36 der größtenteils transparenten Abdeckung 30 sind zudem von innen her lichtundurchlässig lackiert. Auf diese Weise können sie optisch dem Absorbermaterial (nicht dargestellt) angepasst werden, so dass der gesamte Sonnenkollektor 10 eine einheitliche Erscheinung aufweist.

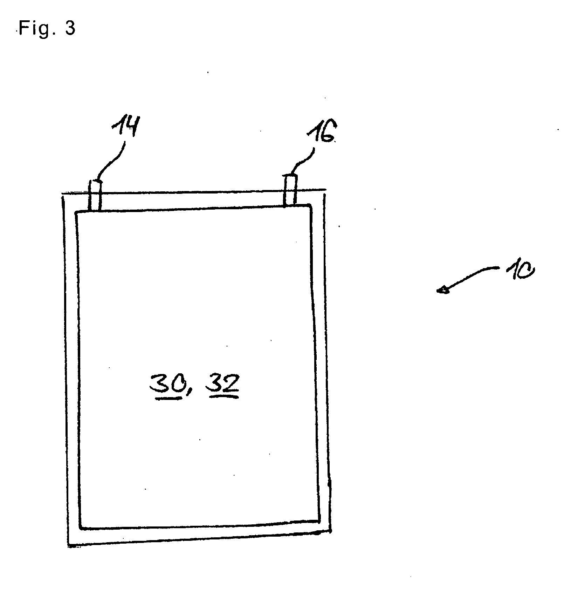

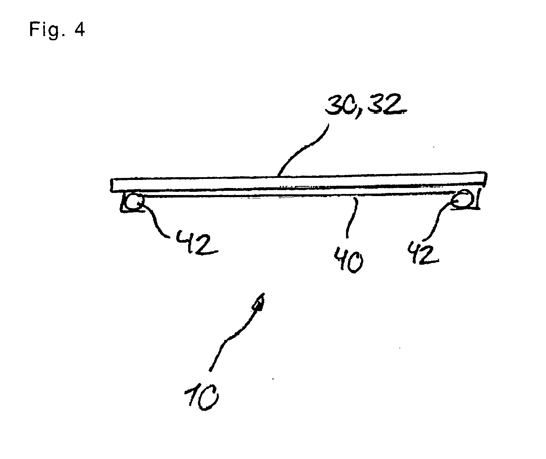

Die in den Figuren 3 und 4 dargestellte zweite Variante eines erfindungsgemäßen Sonnenkollektors 10 umfasst im Wesentlichen nur eine Glasscheibe 32, die eine größtenteils transparente Abdeckung 30 des Kollektors 10 darstellt, sowie eine in definiertem Abstand dahinter angebrachte Absorberschicht 40 mit zugehörigen Sammelleitungen 42. An einer dieser Sammelleitungen 42 sind Zu- bzw. Ablaufleitungen 14 bzw. 16 angeschlossen. Diese Variante des Solarkollektors 10 weist weder eine isolierende Rückwand noch einen Kollektorrahmen auf.

Die unverzichtbare Isolierung des Kollektors kann hierbei wahlweise nachträglich angebracht werden, bspw. in Form von geschäumten Wannen oder losen Isolierschichten. Sie kann jedoch insbesondere durch eine bereits vorhandene Dachisolierung gebildet werden, in welche die Kollektoren in Indach-Montage montiert werden, so dass die Wärmeisolierung des Dachs gleichzeitig die notwendige Isolierung der Kollektorfelder bildet.

Wesentliches Merkmal der vorliegend beschriebenen Kollektoren 10 ist die stabilisierende und weitgehend tragende Funktion der Glasscheibe 32 bzw. der Abdeckung 30, die gleichzeitig den Montagerahmen zur Befestigung des Kollektors auf dem Gebäudedach darstellen kann.

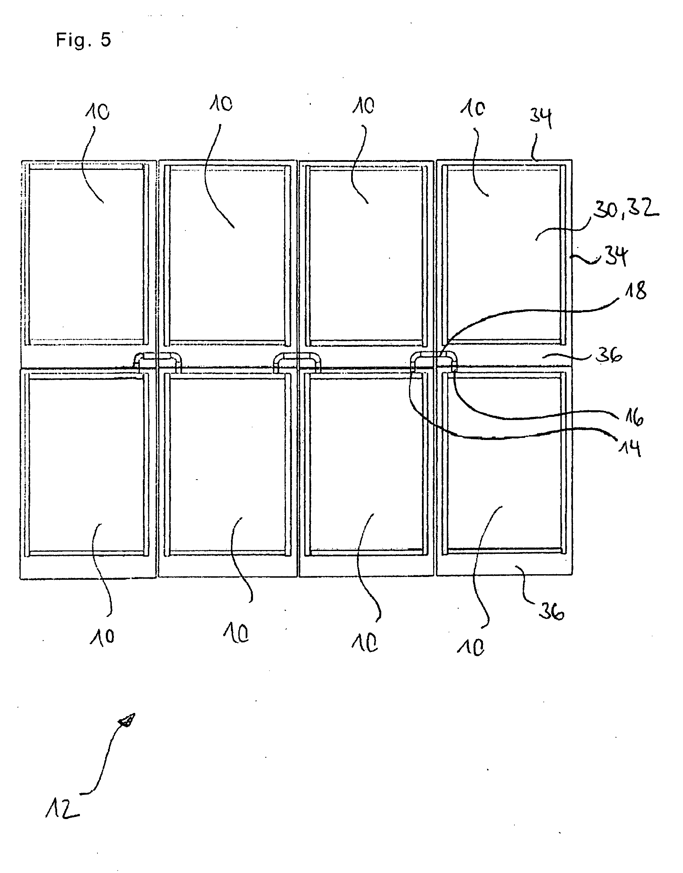

Die Fig. 5 verdeutlicht die Funktion des breiteren Überstands 36 der größtenteils transparenten Abdeckung 30. Aus mehreren der vorgefertigten Sonnenkollektormodule entsprechend der Figuren 1 bis 4 kann ein Sonnenkollektorfeld 12 zusammengesetzt werden. Im Beispiel ist ein Sonnenkollektorfeld 12 dargestellt, das aus acht Sonnenkollektormodulen gemäß Fig. 1 und 2 bzw. gemäß Fig. 3 und 4 aufgebaut ist, die in zwei Viererreihen angeordnet sind. Mit den Überständen 34, 36 der Glasscheibe 32 liegen die Kollektoren 10 auf einem Rahmengerüst (nicht dargestellt) auf. Jeweils nebeneinander liegende Kollektoren 10 der unteren Viererreihe sind über ihre Zu- und Ablaufrohre 14, 16 und Verbindungsrohre 18 miteinander verbunden. Die breiteren Überstände 36 der Kollektoren 10 der oberen Viererreihe decken diese Rohre 14, 16, 18 ab. Auf diese Weise sind die Rohre auf einfache Weise geschützt und die Kollektorfläche 12 weist ein homogenes Erscheinungsbild auf.

Es soll an dieser Stelle nicht unerwähnt bleiben, dass die erfindungsgemäßen Kollektoren nicht nur für eine Dachmontage geeignet sein können, sondern darüber hinaus auch an Fassaden montiert werden können. Wahlweise sind auch Varianten denkbar, bei denen die Kollektoren frei stehend bzw. auf geeigneten Gestellen auf dem Boden oder auf Flachdächern montiert werden können.

Wahlweise können die Kollektoren rechteckförmige Grundrisse aufweisen. Darüber hinaus sind Varianten möglich, bei denen eines oder mehrere Seiten abgeschrägt sind bzw. die eine gewölbte Randkontur aufweisen. Auf diese Weise können die Kollektoren vorhandene Dach- oder Fassadenflächen bis zum Rand ausfüllen, die keinen rechteckigen, sondern einen schrägen, trapezförmigen oder anderen Grundriss aufweisen.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein. Die Erfindung ist nicht auf die vorstehenden Ausführungsbeispiele beschränkt. Vielmehr sind zahlreiche Varianten und Abwandlungen denkbar, die von dem erfindungsgemäßen Gedanken Gebrauch machen und deshalb ebenfalls in den Schutzbereich fallen.

## Patentansprüche

1. Solarkollektoranordnung (12), zusammengesetzt aus einer auf einem Dach anordenbaren Rahmenkonstruktion, auf der eine Mehrzahl von Solarkollektoren (10) angeordnet ist, wobei jeder der Solarkollektoren (10) zumindest einen Absorber, wenigstens ein Wärmetauscherrohr bzw. Wärmetauscherelement mit in den Solarkollektor (10) hinein bzw. aus diesem heraus führenden Zu- bzw. Ablaufrohren (14, 16, 18) bzw. Zu-/Ableitungen, und eine größtenteils transparente, im Wesentlichen flache Abdeckung (30) umfasst, die einen zumindest mittragenden Bestandteil des Solarkollektors (10) bildet, **dadurch gekennzeichnet, dass** die größtenteils transparente Abdeckung (30) den annähernd alleine tragenden Teil des Solarkollektors (10)
bildet, wobei an allen Seiten des Solarkollektors (10) ein die Absorberfläche überragender Abschnitt (34, 36) der größtenteils transparenten Abdeckung (30) vorgesehen ist, der zur Abdeckung von Zu- bzw. Ablaufrohren (14, 16, 18) wenigstens eines unterhalb oder daneben angeordneten Solarkollektors (10) und/oder zur Abdeckung von Verbindungsrohren (14, 16, 18) zwischen zwei unterhalb oder daneben angeordneten Solarkollektoren (10) ausgebildet ist.

2. Solarkollektoranordnung nach Anspruch 1, **dadurch gekennzeichnet, dass** der Solarkollektor (10) weitgehend nur aus der größtenteils transparenten Abdeckung (30), einem Absorber (40) und wenigstens einem Wärmetauscherrohr gebildet ist, wobei der Absorber (40) in einem vorgegebenen Abstand mit der Abdeckung (30) verklebt ist.

3. Solarkollektoranordnung nach Anspruch 1 **dadurch gekennzeichnet, dass** ein Kollektorrahmen (20) mit einer Rückwand vorgesehen ist, wobei die größtenteils transparente Abdeckung (30) mit dem Kollektorrahmen (20) verklebt ist.

4. Solarkollektoranordnung nach einem der Ansprüche 1 bis 3, **dadurch gekennzeichnet, dass** der überragende Abschnitt (34, 36) der größtenteils transparenten Abdeckung (30) lichtundurchlässig beschichtet ist.

5. Solarkollektoranordnung nach Anspruch 3 oder 4, **dadurch gekennzeichnet, dass** der Kollektorrahmen (20) aus in Form gebrachten bzw. geschäumten Isolierplatten gebildet ist, die an der Abdeckung angebracht, insbesondere mit der Abdeckung (30) verklebt sind.

6. Solarkollektoranordnung nach einem der vorhergehenden Ansprüche, **dadurch gekennzeichnet, dass** ein an einer Seite des Solarkollektors (10) breiterer, überragender Abschnitt (34, 36) der größtenteils transparenten Abdeckung (30) eines Solarkollektors (10) die Zu- bzw. Ablaufrohre (14, 16, 18) wenigstens eines unterhalb oder daneben angeordneten Solarkollektors (10) und/oder die Verbindungsrohre (14, 16, 18) zwischen zwei unterhalb oder daneben angeordneten Solarkollektoren (10) abdeckt.

7. Solarkollektoranordnung nach Anspruch 6, **dadurch gekennzeichnet, dass** die umlaufenden Überstände (34, 36) der größtenteils transparenten Abdeckungen (30) der Solarkollektoren (10) auf der auf dem Dach anordenbaren Rahmenkonstruktion aufliegen.

8. Solarkollektoranordnung nach einem der Ansprüche 6 oder 7, **dadurch gekennzeichnet, dass** die Solarkollektoranordnung im Bereich einer Gebäudefassade montierbar ist.

## Claims

1. A solar collector arrangement (12) composed of a frame construction arrangeable on a roof on top of said frame construction a plurality of solar collectors (10) is arranged, wherein each of the solar collectors (10) comprises at least one absorber, at least one heat exchanger tube or heat exchanger element having feed a drain pipes (14, 16, 18) or inlet/outlet lines leading into or out of the solar collector (10), and a mostly transparent, essentially flat covering (30) which forms an at least co-supporting component of the solar collector (10), **characterized in that** the mostly transparent covering (30) forms the substantially sole-supporting part of the solar collector (10), wherein a portion (34, 36) of the mostly transparent covering (30) is provided at all sides of the solar collector (10), wherein said portion (34, 36) projects over the absorber surface and is configured to cover feed or drain pipes (14, 16, 18) of at least one solar collector (10) arranged below or next to it and/or to cover connecting pipes (14, 16, 18) between two solar collectors (10) arranged below or next to it.

2. The solar collector arrangement according to claim 1, **characterized in that** the solar collector (10) is to a large extent formed only by the mostly transparent covering (30), an absorber (40), and at least one heat exchanger pipe, wherein the absorber (40) is adhesively joined to the cover (30) at a predefined spacing.

3. The solar collector arrangement according to claim 1, **characterized in that** a collector frame (20) having a rear wall is provided, wherein the mostly transparent covering (30) is adhesively joined to the collector frame (20).

4. The solar collector arrangement according to any one of claims 1 to 3, **characterized in that** the projecting portion (34, 36) of the mostly transparent covering (30) is coated to be opaque.

5. The solar collector arrangement according to claim 3 or 4, **characterized in that** the collector frame (20) is formed of molded or foamed insulating boards, which are fixed to the cover, particularly adhesively joined to the cover (30).

6. The solar collector arrangement according to any one of the preceding claims, **characterized in that** a projecting portion (34, 36) of the mostly transparent covering (30) of a solar collector (10) is wider at one side of the solar collector (10) and covers the feed or drain pipes (14, 16, 18) of at least one solar collector (10) arranged below or next to it and/or the connecting pipes (14, 16, 18) between two solar collectors (10) arranged below or next to it.

7. The solar collector arrangement according to claim 6, **characterized in that** the circumferential projections (34, 36) of the mostly transparent coverings (30) of the solar collectors (10) rest on the frame construction arrangeable on the roof.

8. The solar collector arrangement according to any one of claims 6 or 7, **characterized in that** the solar collector arrangement can be mounted in the area of a building façade.

## Revendications

1. Ensemble de capteurs solaires (12), composé d'une structure-châssis apte à être disposée sur un toit, sur laquelle une pluralité de capteurs solaires (10) est disposée, chacun des capteurs solaires (10) comprenant au moins un absorbeur, au moins un tube d'échangeur de chaleur ou un élément d'échangeur de chaleur avec des tubes d'arrivée / de départ (14, 16, 18) ou des conduites d'amenée / d'évacuation menant vers le capteur solaire (10) / hors de celui-ci, et un recouvrement (30) en grande partie transparent, sensiblement plat, qui forme une partie intégrante au moins également porteuse du capteur solaire (10), **caractérisé en ce que** le recouvrement (30) en grande partie transparent forme la partie à peu près seule porteuse du capteur solaire (10), un segment (34, 36) du recouvrement (30) en grande partie transparent étant prévu de tous les côtés du capteur solaire (10), lequel segment dépassant la face d'absorbeur et constitué pour recouvrir des tubes d'arrivée / de départ (14, 16, 18) d'au moins un capteur solaire (10) disposé dessous ou à côté et/ou pour recouvrir des tubes de liaison (14, 16, 18) entre deux capteurs solaires (10) disposés dessous ou à côté.

2. Ensemble de capteurs solaires selon la revendication 1, **caractérisé en ce que** le capteur solaire (10) est formé dans une large mesure seulement par le recouvrement (30) en grande partie transparent, un absorbeur (40) et au moins un tube d'échangeur de chaleur, l'absorbeur (40) étant collé au recouvrement (30) à une distance prédéterminée.

3. Ensemble de capteurs solaires selon la revendication 1, **caractérisé en ce qu'**un châssis de capteur (20) est pourvu d'une paroi arrière, le recouvrement (30) en grande partie transparent étant collé au châssis de capteur (20).

4. Ensemble de capteurs solaires selon l'une des revendications 1 à 3, **caractérisé en ce que** le segment dépassant (34, 36) du recouvrement (30) en grande partie transparent est revêtu de manière opaque.

5. Ensemble de capteurs solaires selon la revendication 3 ou 4, **caractérisé en ce que** le châssis de capteur (20) est formé de plaques isolantes mises en forme ou expansées qui sont disposées au niveau du recouvrement, en particulier collées au recouvrement (30).

6. Ensemble de capteurs solaires selon l'une des revendications précédentes, **caractérisé en ce qu'**un segment dépassant (34, 36) du recouvrement (30) en grande partie transparent d'un capteur solaire (10) est plus large d'un côté du capteur solaire (10) et recouvre les tubes d'arrivée / de départ (14, 16, 18) d'au moins un capteur solaire (10) disposé dessous ou à côté et/ou les tubes de liaison (14, 16, 18) entre deux capteurs solaires (10) disposés dessous ou à côté.

7. Ensemble de capteurs solaires selon la revendication 6, **caractérisé en ce que** les dépassements périphériques (34, 36) des recouvrements (30) en grande partie transparents des capteurs solaires (10) reposent sur la structure-châssis apte à être disposée sur le toit.

8. Ensemble de capteurs solaires selon l'une des revendications 6 ou 7, **caractérisé en ce que** l'ensemble de capteurs solaires est apte à être monté au niveau d'une façade de bâtiment.
